# EUROPÄISCHE PATENTSCHRIFT

(11) **EP 1 356 012 B1**
(45) Veröffentlichungstag und Bekanntmachung des Hinweises auf die Patenterteilung: **10.09.2008**
(21) Anmeldenummer: 02702298.7
(22) Anmeldetag: 22.01.2002
(51) Int. Cl.: C10L 1/18, C10M 145/26, C10M 145/36, C08G 65/42, C08G 64/26

(54) **ALKOXYLIERTE ALKYLPHENOLE UND DEREN VERWENDUNG IN KRAFT- UND SCHMIERSTOFFEN**
ALKOXYLATED ALKYL PHENOLS AND THE USE THEREOF IN FUELS AND LUBRICANTS
ALKYLPHENOLS ALCOXYLES ET LEUR UTILISATION DANS DES CARBURANTS ET DES LUBRIFIANTS

(30) Priorität: 23.01.2001 DE 10102913
(43) Veröffentlichungstag der Anmeldung: 29.10.2003
(60) Teilanmeldung: 07113113.0
(73) Patentinhaber: BASF SE, 67056 Ludwigshafen (DE)
(72) Erfinder: LANGE, Arno, 67098 Bad Dürkheim (DE); RATH, Hans, Peter, 67269 Grünstadt (DE); WALTER, Marc, 67227 Frankenthal (DE)
(74) Vertreter: Kinzebach, Werner
(86) Internationale Anmeldenummer: PCT/EP2002/000599
(87) Internationale Veröffentlichungsnummer: WO 2002/059237

(56) Entgegenhaltungen:
- EP-A- 0 293 715
- EP-A- 0 548 617
- EP-A- 0 781 794
- EP-A- 0 878 532
- WO-A-00/52117
- US-A- 2 786 745
- US-A- 3 328 284
- US-A- 4 479 882

## Beschreibung

Die vorliegende Erfindung betrifft die Verwendung alkoxylierter Alkylphenole, die wenigstens einen langkettigen Alkylrest mit mindestens einem tertiären oder quartären Kohlenstoffatom aufweisen als Kraftstoff- oder Schmierstoffadditive. Die Erfindung betrifft weiterhin neue alkoxylierte Polyalkenylphenole, ein Verfahren zu deren Herstellung und deren Verwendung als Komponente von Kraft- und Schmierstoffzusammensetzungen. Sie betrifft ferner Kraft- und Schmierstoffzusammensetzungen und Additivgemische, welche diese alkoxylierten Alkylphenole, speziell diese alkoxylierten Polyalkenylphenole, enthalten.

Vergaser und Einlasssysteme von Ottomotoren, aber auch Einspritzsysteme für die Kraftstoffdosierung, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoff-Verhältnis im Leerlauf und im unteren Teillastbereich, so dass das Gemisch magerer, die Verbrennung unvollständiger wird und damit die Anteile unverbrannter oder teilverbrannter Kohlenwasserstoffe im Abgas größer werden. Steigender Benzinverbrauch ist die Folge.

Es ist bekannt, dass zur Vermeidung dieser Nachteile Kraftstoffadditive zur Reinhaltung von Ventilen und Vergasern bzw. Einspritzsystemen von Ottomotoren verwendet werden (vgl. z. B.: M. Rossenbeck in Katalysatoren, Tenside, Mineralöladditive, Hrsg. J. Falbe, U. Hasserodt, S. 223, G. Thieme Verlag, Stuttgart 1978). Derartige grenzflächenaktive Kraftstoffadditive werden im Allgemeinen als "Detergenzien" bezeichnet. Im Bereich der Schmierstoffzusammensetzungen werden oftmals sogenannte "Dispergatoren" als grenzflächenaktive Additive eingesetzt, wobei diese teilweise auch für den Einsatz als Detergenzien in Kraftstoffzusammensetzungen geeignet sind.

Detergenzien und Dispergatoren gelangen im Allgemeinen in Kombination mit einem oder mehreren Trägerölen zur Anwendung. Bevorzugt sind dabei Trägeröle, die selbst wie Detergenzien und/oder Dispergatoren wirken. Diese Trägeröle können z. B. eine zusätzliche "Waschfunktion" ausüben und so die Detergenzien in ihrer reinigenden und rein erhaltenden Wirkung unterstützen und fördern, um somit zur Reduzierung der benötigten Menge an Detergenzien beizutragen. Als Trägeröle werden üblicherweise viskose, hochsiedende und insbesondere thermostabile Flüssigkeiten eingesetzt. Häufig verwendete Trägeröle sind beispielsweise hochsiedende raffinierte Mineralölfraktionen, synthetische Flüssigkeiten wie z. B. die öllöslichen Addukte von Alkylenoxiden an Alkoholen etc. Beim Einsatz überziehen die Trägeröle die heißen Metalloberflächen, wie z. B. Einlassventile, mit einem dünnen Flüssigkeitsfilm und verhindern oder verzögern dadurch die Bildung und Ablagerung von Zersetzungsprodukten an den Metalloberflächen.

Die EP-A-0 277 345 beschreibt den Einsatz von Alkylenoxidaddukten an Polybutyl- oder Polyisobutenalkohole als Trägeröle in Kraft- oder Schmierstoffzusammensetzungen.

Die DE-A-36 28 504 beschreibt den Einsatz eines Adduktes von 4 bis 5 mol Ethylenoxid an Nonylphenol als Zusatz zu Ottokraftstoffen.

Die WO-A-89/11519 beschreibt Schmierölzusammensetzungen, die wenigstens ein Carbonsäurederivat enthalten, das durch die Umsetzung eines substituierten Bernsteinsäurederivats als Acylierungsmittel mit einem Amin erhältlich ist. Das Bersteinsäurederivat kann dabei Reste aufweisen, die von Polyalkenen abgeleitet sind, welche zusätzlich eine aromatische Gruppe aufweisen können. Geeignete Amine sind z. B. Polyoxyalkylen-Polyamine. Die Verwendung von alkoxylierten Polyalkylenphenolen als Kraft- oder Schmierstoffadditive wird in diesem Dokument nicht beschrieben.

Die US 4,933,485 beschreibt Schmierölzusammensetzungen, die langkettige Alkylphenolpoly(oxyalkylen)aminocarbamate enthalten. Zu deren Herstellung werden alkoxylierte Alkylphenole mit langkettigen Alkylresten als Zwischenprodukte eingesetzt. Ein Einsatz der alkoxylierten Alkylphenole selbst als Kraft- oder Schmierstoffadditive wird nicht beschrieben.

Gao und Kops beschreiben im Polymer Bulletin 34, 279 bis 286 (1995) die Veretherung von Polyisobutenphenol mit Polyalkylenglycolderivaten. Ein Einsatz der dabei resultierenden Produkte als Additive in Kraft- oder Schmierstoffzusammensetzungen wird nicht beschrieben.

Die EP 0781794 A1 beschreibt sehr langkettige Alkylphenylpoly(oxyalkylen)amine und deren Einsatz in Kraftstoffzusammensetzungen.

Die EP 0548617 A2 beschreibt Kraftstoffe für Ottomotoren, die eine Kombination aus einer Stickstoff-haltigen Detergens-Komponente und einem Alkoxylat als Trägeröl-Komponente enthalten, wobei das Alkoxylat ein Dialkylphenol-gestartetes Propoxylat ist.

Die US 5,300,701 beschreibt ein Verfahren zur Herstellung eines Polyisobutyl-substituierten Hydroxyaromaten, bei dem man eine hydroxyaromatische Verbindung mit einem Polyisobuten mit einem zahlenmittleren Molekulargewicht im Bereich von 300 bis 5000 und einen Methylvinyliden-Isomerengehalt von wenigstens 70 % alkyliert.

Nachteilig an den aus dem Stand der Technik bekannten Trägerölen ist, dass diese häufig nur begrenzt mit anderen Additiven verträglich sind, so dass es zu einer ungewollten Entmischung kommen kann. Zudem verursacht die meist hohe Viskosität dieser Trägeröle oft Formulierungsprobleme. Gravierender ist jedoch, dass solche herkömmlichen Additive je nach Zusammensetzung, Motortyp und Anwendungskonzentration des Additivs, sogenanntes Ventilstecken verursachen kann, welches zum totalen Motorausfall führen kann. Unter "Ventilstecken" versteht man den vollständigen Kompressionsverlust auf einem oder mehreren Zylindern des Verbrennungsmotors, wenn - verursacht durch Polymerablagerungen am Ventilschaft - die Federkräfte nicht mehr ausreichen, die Ventile ordnungsgemäß zu schließen.

Der vorliegenden Erfindung liegt die Aufgabe zugrunde, neue Additive für die Verwendung in Kraft- oder Schmierstoffzusammensetzungen zur Verfügung zu stellen. Diese sollen sich vorzugsweise als Trägeröle für Detergenzien und/oder Dispergatoren eignen, die die verbreiteten Nachteile des Standes der Technik nicht mehr zeigen. Insbesondere sollen diese Trägeröle selbst eine zusätzliche Wirksamkeit als grenzflächenaktive Additive, d. h. als Detergenzien und/oder Dispergatoren aufweisen. Der Erfindung liegt weiterhin die Aufgabe zugrunde, neue Additive und ein Verfahren zu deren Herstellung zur Verfügung zu stellen.

Überraschenderweise wurde nun gefunden, dass diese Aufgabe durch die Verwendung von bestimmten alkoxylierten Alkylphenolen mit langkettigen aliphatischen Kohlenwasserstoffresten gelöst wird, wobei wenigstens eines der Kohlenstoffatome ein tertiäres oder quartäres Kohlenstoffatom (d. h. eine verzweigungsstelle) ist.

Gegenstand der vorliegenden Erfindung ist daher die verwendung von Verbindungen der allgemeinen Formel I

(R^{a} R^{b}m R^{c}ₙ)B-(O-A)ₚ-OH (I)

worin
- R^{a},: R^{b} und R^{c} unabhängig voneinander für einen Polyalkenylrest stehen, der wenigstens ein tertiäres oder quartäres Kohlenstoffatom aufweist, wobei die Polyalkenylreste R^{a} und, soweit vorhanden, R^{b} und R^{c} sich von Polyalkenen ableiten, die wenigstens 70 Gew.-% Isobuten, bezogen auf die Gesamtmenge der eingebauten Alkene, eingebaut enthalten, und wobei die Poly-alkenylreste R^{a} und, soweit vorhanden, R^{b} und R^{c} sich von Polyalkenen ableiten, die wenigstens eine C=C-Doppelbindung aufweisen und die zu wenigstens 70 Mol-% mit Methylvinylidengruppen (-C(-CH₃)=CH₂) und/oder Dimethylvinylgruppen (-CH=C(CH₃)₂) terminiert sind,
- B: für einen Benzolring steht, der zusätzlich noch 4-(m+n) von R^{b} und R^{c} verschiedene Substituenten tragen kann, die ausgewählt sind unter Alkyl und Alkoxy,
- A: für C₂- bis C₈-Alkylen steht, wobei die Alkylenoxideinheiten -(O-A)- gleiche oder verschiedene Alkylengruppen A aufweisen können und die Reihenfolge der Alkylenoxideinheiten beliebig ist,
- m und: n unabhängig voneinander für 0 oder 1 stehen,
- p: für eine ganze Zahl von 5 bis 200 steht und
die Gruppe (R^{a} R^{b}ₘ R^{c}ₙ)B- ein zahlenmittleres Molekulargewicht im Bereich von 254 bis 5000 aufweist,
und von Gemischen davon als Additive in Kraft- oder Schmierstoffzusammensetzungen.

Bevorzugt sind Polyalkenylreste R^{a} und, soweit vorhanden, R^{b} und R^{c}, die 10 bis 150, insbesondere 15 bis 100, speziell 20 bis 40 Kohlenstoffatome aufweisen.

Vorzugsweise leiten sich die Polyalkenylreste R^{a} und, soweit vorhanden, R^{b} und R^{c} von wenigstens einem Polyalken ab, das mindestens eine C=C-Doppelbindung aufweist und das wenigstens ein C₃-bis C₃₀-Alken und gegebenenfalls zusätzlich Ethylen eingebaut enthält. Bevorzugt enthalten diese Polyalkene wenigstens ein C₃- bis C₁₂-, insbesondere ein C₃- bis C₆-Alken, eingebaut (einpolymerisiert). Bevorzugte Alkene sind z. B. Propen, 1-Buten, Isobuten, 1-Penten, 2-Methylbuten, 1-Hexen, 2-Methylpenten, 3-Methylpenten, 4-Methylpenten, die isomeren Hexene, Heptene, Octene, Nonene, Decene, Undecene, Dodecene und Mischungen davon. Als zusätzliches Comonomer der zuvor genannten Alkene und Alkengemische kann Ethylen eingesetzt werden. Besonders bevorzugte Alkene sind Propen, n-Buten, Isobuten und Mischungen davon. Die Herstellung der Polyolefine erfolgt nach üblichen, dem Fachmann bekannten Verfahren wie z. B. durch kationisch oder koordinative Oligo- bzw. Polymerisation. Vorzugsweise wird die Oligo- bzw. Polymerisation so geführt, dass der Kettenabbruch zu einer Doppelbindung führt, welche weiter zum entsprechende Polyalkylenphenol funktionalisiert werden kann.

Bevorzugt sind Polyalkene, die einen Anteil an α- und/oder β-ständigen Doppelbindungen von mindestens 70 mol-%, insbesondere mindestens 80 mol-% und speziell mindestens 85 mol-% aufweisen.

Vorzugsweise leiten sich die Polyalkenylreste R^{a}, R^{b} und/oder R^{c} von Polyalkenen ab, die wenigstens 80 Gew.-% Isobuten, bezogen auf die Gesamtmenge der zu polymerisierenden Alkene, eingebaut enthalten.

R^{a}, R^{b} und R^{c} leiten sich vorzugsweise von einem Polyisobuten ab, welches gewünschtenfalls bis zu 20 Gew.-% n-Buten-Einheiten enthalten kann. Besonders bevorzugt sind Isobutenhomopolymere.

Bevorzugte Polyisobutene sind sogenannte "hochreaktive" Polyisobutene, die sich von den "niedrigreaktiven" Polyisobutenen durch den Gehalt an Doppelbindungen in der α- oder β-Position unterscheiden. Besonders geeignete hochreaktive Polyisobutene sind z. B. die Glissopal^{®}-Marken der BASF AG, wie z. B. Glissopal^{®}1000 (zahlenmittleres Molekulargewicht Mₙ = 1000) und Glissopal V 33 (Mₙ = 550), die Doppelbindungen überwiegend in der α-Position aufweisen.

Vorzugsweise werden Verbindungen der Formel I eingesetzt, bei denen die Einheit (R^{a}R^{b}ₘR^{c}ₙ)B- ein zahlenmittleres Molekulargewicht im Bereich von etwa 270 bis 5000, bevorzugt 270 bis 2500, besonders bevorzugt 350 bis 1500, insbesondere 400 bis 850 und speziell 450 bis 700 aufweist.

In dem Benzolring B steht der Rest R^{a} in ortho-, meta- oder paraStellung zur Sauerstofffunktion. Zwei Kohlenwasserstoffreste R^{a} und R^{b} liegen vorzugsweise 2,4-, 2,5- oder 2,6-verknüpft zur Sauerstofffunktion vor. Drei Kohlenwasserstoffreste R^{a}, R^{b} und R^{c} liegen vorzugsweise 2,4,6-verknüpft zur Sauerstofffunktion vor. Dabei können die beschriebenen Homologen bzw. Isomeren rein oder in Form von Gemischen vorliegen. Bevorzugt, weil einfach herstellbar, ist das para-Isomer sowie Mischungen, in denen dieses zu mehr als 60 Mol-% vorliegt. Bevorzugt ist weiterhin das 2,4-disubstituierte Derivat sowie Mischungen, in denen dieses zu mehr als 50 Mol-% vorliegt. Nach einer weiteren geeigneten Ausführungsform kann der Benzolring B zusätzlich noch maximal 4-(m+n) von R^{b} und R^{c} verschiedene Substituenten tragen, die bevorzugt unter C₁- bis C₈-Alkyl- und/oder C₁- bis C₈-Alkoxygruppen ausgewählt sind. Insbesondere geeignet als Substituenten sind Methyl, Ethyl, n-Propyl, Isopropyl, n-Butyl, sek-Butyl, tert.-Butyl, die isomeren Pentyle und Hexyle, Methoxy, Ethoxy, n-Propoxy, Isopropoxy, die isomeren Butoxy-, Pentoxy- und Hexoxy-Reste etc.

Die Alkylengruppe A leitet sich vorzugsweise von den entsprechenden Alkylenoxiden, wie z. B. Ethylenoxid, Propylenoxid, 1,2-Butylenoxid, cis-2,3-Butylenoxid, trans-2,3-Butylenoxid etc. ab. Geeignete Alkylengruppen A sind jedoch auch von 1,2-Alkylenen verschiedene Gruppen, wie z. B. 1,3-Propylen, 1,4-Butylen, 1,6-Bexylen, 1,8-Octylen etc. Die Alkylengruppe A leitet sich weiterhin vorzugsweise von entsprechenden cyclischen Ethern, wie Tetrahydrofuran ab. Besonders bevorzugt steht A für 1,2-Propylen, 1,2-Butylen und Mischungen davon.

Bevorzugt ist die Verwendung von Verbindungen, bei denen der Anteil des Sauerstoffs im Alkoxylatrest -A-(O-A)ₚ₋₁-OH mindestens 16,5 Gew.-%, besonders bevorzugt mindestens 17,5 Gew.-%, insbesondere mindestens 18,5 Gew.-% des zahlenmittleren Molekulargewichts der Verbindungen der Formel I ausmacht. Die bevorzugte Obergrenze für p hängt somit vorzugsweise vom Molekulargewicht des (R^{a}R^{b}ₘR^{c}ₙ)B-O-Restes ab. Üblicherweise steht p höchstens für 150, bevorzugt höchstens für 100, besonders bevorzugt höchstens für 45, speziell höchstens für 35. Mindestens steht p für einen Wert von 5.

Werden Gemische von Verbindungen der allgemeinen Formel I eingesetzt, so kann p auch für eine gebrochene Zahl stehen.

Vorzugsweise ist die Molmasse des Alkoxylatrestes -A-(O-A)ₚ₋₁-OH größer als die Molmasse des Restes (R^{a}R^{b}ₘR^{c}ₙ)B-O-H. Die Molmasse des Alkoxylatrestes beträgt insbesondere das 1,5 bis 5-fache, speziell das 2 bis 4-fache, der Molmasse des Restes (R^{a}R^{b}ₘR^{c}ₙ)B-O-H. Die Molmassenberechnungen beziehen sich dabei auf zahlenmittlere Molekulargewichte.

Die Herstellung von Verbindungen der allgemeinen Formel I erfolgt z. B. durch
a) Alkylierung eines Phenols der allgemeinen Formel H-B-OH, worin B die zuvor angegebenen Bedeutungen besitzt, mit wenigstens einem mindestens einfach ungesättigten Kohlenwasserstoff, bevorzugt wenigstens einem Polyolefin, wie zuvor beschrieben, in Gegenwart eines Alkylierungskatalysators und entweder
b1) Umsetzung des Reaktionsproduktes aus Schritt a) mit wenigstens einer Verbindung, die ausgewählt ist unter C₂- bis C₈-Alkylenoxiden, cyclischen Ethern mit 2 bis 8 Kohlenstoffatomen und Mischungen davon, oder
b2) Veretherung des Reaktionsproduktes aus Schritt a) mit wenigstens einem Polyalkylenoxid der allgemeinen Formel H-(O-A)ₚ-OH oder mit einem Derivat davon.

Für die Alkylierung in Schritt a) kann unsubstituiertes Phenol oder können substituierte Phenole eingesetzt werden, die in Abhängigkeit von dem angestrebten Alkylierungsgrad (a = 1, 2 oder 3) noch maximal 4-a weitere Substituenten aufweisen können. Geeignete Substituenten sind die zuvor beschriebenen Alkyl- und Alkoxyreste. Die Alkylierung erfolgt in Gegenwart eines geeigneten Alkylierungskatalysators, wobei man im Allgemeinen die für Friedel-Crafts-Reaktionen üblichen Katalysatoren einsetzt. Geeignete Katalysatoren sind beispielsweise Protonensäuren wie Schwefelsäure, Phosphorsäure und organische Sulfonsäuren, z. B. Trifluormethansulfonsäure, Lewissäuren, wie Aluminiumtrihalogenide, z. B. Aluminiumtrichlorid oder Aluminiumtribromid, Bortrihalogenide z. B. Bortrifluorid und Bortrichlorid, Zinnhalogenide, z. B. Zinntetrachlorid, Titanhalogenide, z. B. Titantetrabromid und Titantetrachlorid, Eisenhalogenide, z. B. Eisentrichlorid und Eisentribromid. Geeignet sind weiterhin saure Ionenaustauscher, wie sulfonierte (teil)vernetzte Polystyrole, Zeolithe, anorganische Festkörpersäuren, wie Polywolframsäure(n) oder Zirconoxid-basierte Katalysatoren.

Zur Herstellung von 1:1-Addukten (a=1) legt man üblicherweise in einem Reaktionsgefäß das Phenol oder Phenolderivat und den Katalysator, gegebenenfalls in einem Lösungsmittel, vor und gibt den Kohlenwasserstoff, der gewünschtenfalls auch in einem Lösungsmittel gelöst sein kann, zu. Zur Herstellung von Addukten mit höherem Polyolefinanteil (a>1) legt man vorzugsweise den Kohlenwasserstoff und den Katalysator, gegebenenfalls in einem Lösungsmittel, vor und gibt das Phenol oder Phenolderivat, gegebenenfalls gelöst, zu. Die Herstellung von Addukten mit a=1 und mit a>1 kann jeweils auch bei inverser zugabereihenfolge erfolgen.

Geeignete Lösungsmittel für die Alkylierung in Schritt a) sind beispielsweise Kohlenwasserstoffe, wie die isomeren Pentane, Hexane und Heptane, Cycloalkane wie Cyclopentan und Cyclohexan, halogenierte Kohlenwasserstoffe, wie Dichlormethan, Trichlormethan, Tetrachlormethan, 1,2-Dichlorethan und 1,1,1-Trichlorethan, Aromaten, wie Toluol oder die isomeren Xylole, sowie Mischungen der vorgenannten Lösungsmittel.

Der Alkylierungsgrad a des Aromaten kann auch durch das molare Verhältnis von Aromat zu ungesättigtem aliphatischen Kohlenwasserstoff beeinflußt werden. Zur Herstellung im Wesentlichen monosubstituierter Phenole liegt das molare Verhältnis von Aromat zu Kohlenwasserstoff im Allgemeinen in einem Bereich von etwa 0,8:1 bis 5:1. Zur Herstellung von im Wesentlichen höher substituierten Phenolen (a=2 oder 3) liegt das molare Verhältnis von Aromat zu Kohlenwasserstoff im Allgemeinen in einem Bereich von etwa 1:1 bis 1:5.

Die Reaktion erfolgt vorzugsweise in einem Temperaturbereich von -20 °C bis 200 °C. Beim Einsatz von Lewis- oder Protonensäuren als Alkylierungskatalysatoren erfolgt die Umsetzung vorzugsweise in einem Temperaturbereich von etwa -10°C bis 50 °C. Beim Einsatz von Festbettkatalysatoren (Ionenaustauscher und anorganische Festkörpersäuren) liegt die Temperatur bevorzugt in einem Bereich von etwa 50 bis 150 °C.

Die Reaktion kann bei Normaldruck, Überdruck oder Unterdruck erfolgen. Vorzugsweise liegt der Druck in einem Bereich von etwa 50 mbar bis 50 bar. Üblicherweise erfolgt die Reaktion bei Umgebungsdruck bzw. dem Eigendruck der Reaktanten bei der jeweiligen Reaktionstemperatur.

Die Alkoxylierung in Schritt b1) erfolgt nach einer bevorzugten Ausführungsform durch Umsetzung der Reaktionsprodukte aus Schritt a) mit mindestens einem Alkylenoxid.

Bevorzugt sind die Alkylenoxide ausgewählt unter Verbindungen der allgemeinen Formel II 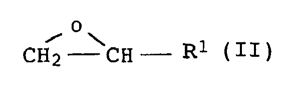 worin
R¹ für Wasserstoff oder einen geradkettigen oder verzweigten C₁-bis C₆-Alkylrest steht,
und Mischungen davon.

Bevorzugt sind die Alkylenoxide ausgewählt unter Ethylenoxid, Propylenoxid, Butylenoxid und Mischungen davon.

Die Umsetzung der alkylierten Phenole oder Phenolgemische mit dem/den Alkylenoxid(en) erfolgt nach üblichen, dem Fachmann bekannten Verfahren und in dafür üblichen Apparaturen.

Die mittlere Kettenlänge der Polyetherketten der so funktionalisierten Alkylphenole kann durch das Molmengenverhältnis von Phenol zu Alkylenoxid bestimmt werden. Bevorzugt werden alkoxilierte Polyalkenylphenole mit etwa 5 bis 200, bevorzugt etwa 5 bis 45, Alkylenoxideinheiten hergestellt.

Die Reaktionsprodukte aus Schritt a) können gewünschtenfalls nur mit einem Alkylenoxid oder mit zwei oder mehreren verschiedenen Alkylenoxiden umgesetzt werden. Bei der Umsetzung der Phenole mit einem Gemisch aus zwei oder mehreren Alkylenoxiden enthalten die resultierenden Alkoxilate die Alkylenoxideinheiten im Wesentlichen statistisch verteilt. Werden die Alkylenoxide getrennt nacheinander eingesetzt, so resultieren Alkoxilate, die entsprechend der Zugabereihenfolge die Alkylenoxideinheiten in Form von Blökken einpolymerisiert enthalten.

Die Alkoxilierung kann durch starke Basen, wie Alkalihydroxide und Erdalkalihydroxide, Brönstedsäuren oder Lewissäuren, wie AlCl₃, BF₃ etc. katalysiert werden. Die Einsatzmenge der Katalysatoren liegt im Allgemeinen in einem Bereich von etwa 0,01 bis 1 Gew.-%, insbesondere 0,05 bis 0,5 Gew.-%, bezogen auf die Gesamtmenge der Edukte.

Die Alkoxylierung erfolgt vorzugsweise bei Temperaturen im Bereich von etwa 70 bis 200 °C, bevorzugt etwa 100 bis 160 °C. Der Druck liegt vorzugsweise zwischen Umgebungsdruck und 150 bar, insbesondere im Bereich von 3 bis 30 bar. Gewünschtenfalls kann das Alkylenoxid eine Inertgasbeimischung, z. B. von etwa 5 bis 60 %, enthalten.

Das Umsetzungsprodukt kann nach üblichen, dem Fachmann bekannten Verfahren, wie z. B. durch Ausgasen flüchtiger Bestandteile im Vakuum und gegebenenfalls durch Filtration aufgearbeitet werden.

Nach einer weiteren geeigneten Ausführungsform können die Reaktionsprodukte aus Schritt a) auch mit wenigstens einem cycloaliphatischen Ether, wie z. B. Tetrahydrofuran, umgesetzt werden. Die Umsetzung erfolgt dann vorzugsweise in Gegenwart von sauren Katalysatoren wie z. B. Schwefelsäure oder Fluoroschwefelsäure. Derartige Herstellungsverfahren sind dem Fachmann bekannt.

Alternativ zur Alkoxylierung in Schritt b1) können die Reaktionsprodukte aus Schritt a) auch durch Umsetzung mit einem Polyalkylenoxid der allgemeinen Formel H-(O-A)ₚ-OH oder einem Derivat davon verethert werden (Schritt b2). Derartige Umsetzungen werden z. B. von Gao und Kops im Polymer Bulletin 34, 279 bis 286 (1995) beschrieben, worauf hier in vollem Umfang Bezug genommen wird. Dabei wird das Polyalkylenoxid in Form seines Tosylates zur Veretherung eingesetzt.

Die erfindungsgemäß verwendeten Verbindungen der Formel I eignen sich in vorteilhafter Weise als Trägeröle für Detergenzien und/oder Dispergatoren in Kraft- und Schmierstoffzusammensetzungen. Besonders bevorzugt werden sie in Kraftstoffzusammensetzungen, insbesondere in Ottokraftstoffzusammensetzungen eingesetzt.

Geeignete grenzflächenaktive Additive mit Detergenzwirkung oder mit Ventilsitzverschleiß-hemmender Wirkung für den Einsatz mit den zuvor genannten Trägerölen sind z. B. Verbindungen, die mindestens einen hydrophoben Kohlenwasserstoffrest mit einem zahlengemittelten Molekulargewicht (M_{N}) von 85 bis 20000 und mindestens eine polare Gruppierung, ausgewählt aus
(a) Mono- oder Polyaminogruppen mit bis zu 6 Stickstoffatomen, wobei mindestens ein Stickstoffatom basische Eigenschaften hat,
(b) Nitrogruppen, gegebenenfalls in Kombination mit Hydroxylgruppen,
(c) Hydroxylgruppen in Kombination mit Mono- oder Polyaminogruppen, wobei mindestens ein Stickstoffatom basische Eigenschaften hat,
(d) Carboxylgruppen oder deren Alkalimetall- oder Erdalkalimetallsalzen,
(e) Sulfonsäuregruppen oder deren Alkalimetall- oder Erdalkalimetallsalzen,
(f) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind,
(g) Carbonsäureestergruppen,
(h) aus Bernsteinsäureanhydrid abgeleitete Gruppierungen mit Hydroxy- und/oder Amino- und/oder Amido- und/oder Imidogruppen und
(i) durch herkömmliche Mannich-Umsetzung von phenolischen Hydroxylgruppen mit Aldehyden und Mono- oder Polyaminen erzeugte Gruppierungen
aufweisen.

Als Beispiele für obige Additivkomponenten mit Detergenswirkung oder mit Ventilsitzverschleiß-hemmender Wirkung seien zu nennen:

Mono- oder Polyaminogruppen (a) enthaltende Additive sind vorzugsweise Polyalkenmono- oder Polyalkenpolyamine auf Basis von Polypropen oder von hochreaktivem (d. h. mit überwiegend endständigen Doppelbindungen - meist in der α-Position) oder konventionellem (d. h. mit überwiegend mittenständige Doppelbindungen) Polybuten oder Polyisobuten mit M_{N} = 300 bis 5000, die nicht nach dem erfindungsgemäßen Verfahren erhalten wurden. Derartige Additive auf Basis von hochreaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten hochreaktiven Polyisobutens eingesetzt werden. Entsprechende Additive auf Basis von Polypropen sind insbesondere in der WO-A 94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A 97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in DE-A 196 20 262 beschrieben sind.

Nitrogruppen, gegebenenfalls in Kombination mit Hydroxylgruppen, (b) enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A 96/03367 und WO-A 96/03479 beschrieben sind. Diese Umsetzungsprodukte stellen in der Regel Mischungen aus reinen Nitropolyisobutanen (z. B. α,β-Dinitropolyisobutan) und gemischten Hydroxynitropolyisobutanen (z. B. α-Nitro-β-hydroxypolyisobutan) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit M_{N} = 300 bis 5000, mit Ammoniak, Mono- oder Polyaminen, wie sie insbesondere in EP-A 476 485 beschrieben sind.

Carboxylgruppen oder deren Alkalimetall- oder Erdalkalimetallsalze (d) enthaltende Additive sind vorzugsweise Copolymere von C₂-C_{4O}-Olefinen mit Maleinsäureanhydrid mit einer Gesamt-Molmasse von 500 bis 20000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)butenaminen oder Polyetheraminen eingesetzt werden.

Sulfonsäuregruppen oder deren Alkalimetall- oder Erdalkalimetallsälze (e) enthaltende Additive sind vorzugsweise Alkalimetall- oder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂- bis C₄-alkylengruppierungen (f) enthaltende Additive sind vorzugsweise Polyether oder Polyetheramine, welche durch Umsetzung von C₂- bis C₆₀-Alkanolen, C₆- bis C₃₀-Alkandiolen, Mono- oder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigen Alkanolen oder Polyolen, insbesondere solche mit einer Mindestviskosität von 2 mm² bei 100 °C, wie sie insbesondere in DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit M_{N} = 300 bis 5000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Diese Verbindungen eignen sich vorteilhaft als Dispergatoren, welche insbesondere in Schmierölen eingesetzt werden. Sie eignen sich jedoch auch als Detergenzien für Kraftstoffzusammensetzungen. Derartige Ottokraftstoffadditive sind insbesondere in US-A 4 849 572 beschrieben.

Durch herkömmliche Mannich-Umsetzung von phenolischen Hydroxylgruppen mit Aldehyden und Mono- oder Polyaminen erzeugte Gruppierungen (i) enthaltende Additive sind vorzugsweise Umsetzungsprodukte von polyisobutensubstituierten Phenolen mit Formaldehyd und primären Mono- oder Polyaminen wie Ethylendiamin, Diethylentriamin, Triethylentetramin, Tetraethylenpentamin oder Dimethylaminopropylamin. Derartige "Polyisobuten-Mannichbasen" sind insbesondere in der EP-A 831 141 und der US 4,117,011 beschrieben. Weiterhin können sekundäre Amine, wie Dimethylamin oder Diethanolamin, analog umgesetzt werden. Solche Verbindungen sind aus der DE-A-39 14 379 bekannt, worauf hier Bezug genommen wird.

Bezüglich der eingesetzten Detergenzien und Dispergatoren wird auf die Offenbarung der zuvor genannten Schriften ausdrücklich Bezug genommen.

Ein weiterer Gegenstand der Erfindung sind Additivgemische für Kraft- oder Schmierstoffe, die wenigstens eine Verbindung der allgemeinen Formel I, wie zuvor definiert, gegebenenfalls in Kombination mit weiteren Kraft- oder Schmierstoffadditiven enthalten.

Geeignete weitere Additive sind zunächst die zuvor genannten Detergenzien und/oder Dispergatoren. Da die erfindungsgemäßen und erfindungsgemäß eingesetzten Verbindungen der Formel I vorteilhafterweise im Allgemeinen auch selbst Ventil-reinigende und/oder Ventil-reinhaltende Wirkung zeigen, können sie jedoch auch selbst als grenzflächenaktive Additive ohne Zusatz von Detergenzien und/ oder Dispergatoren in den erfindungsgemäßen Additivgemischen eingesetzt werden.

Als Lösungs- oder Verdünnungsmittel (bei Bereitstellung von Additivpaketen) kommen aliphatische.und aromatische Kohlenwasserstoffe, z. B. Solvent Naptha, in Betracht.

Weitere übliche Additivkomponenten, die mit den erfindungsgemäßen Additiven kombiniert werden können, sind beispielsweise Korrosionsinhibitoren, wie z. B. auf Basis von zur Filmbildung neigenden Ammoniumsalzen organischer Carbonsäuren oder von heterocyclischen Aromaten, Antioxidantien oder Stabilisatoren, beispielsweise auf Basis von Aminen wie p-Phenylendiamin, Dicyclohexylamin oder Derivaten davon oder von Phenolen wie 2,4-Di-tert.-butylphenol oder 3,5-Di-tert.-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl sowie Farbstoffe (Marker). Gegebenenfalls werden auch Amine zur Absenkung des pH-Wertes des Kraftstoffes zugesetzt.

Als weitere übliche Komponenten und Additive können auch herkömmliche Trägeröle eingesetzt werden. Hier sind beispielsweise mineralische Trägeröle (Grund-öle), insbesondere solche der Viskositätsklasse "Solvent Neutral (SN) 500 bis 2000", synthetische Trägeröle auf Basis von Olefinpolymerisaten mit M_{N} = 400 bis 1800, vor allem auf Polybuten- oder Polyisobuten-Basis (hydriert oder nicht hydriert), von Polyalphaolefinen oder Polyinternalolefinen sowie synthetische Trägeröle auf Basis alkoxylierter langkettiger Alkohole oder Phenole zu nennen. Ebenfalls geeignet als weitere Additive sind Polyalkenalkohol-Polyetheramine, wie beispielsweise in der DE-199 16 512.2 beschrieben.

Weiterer Gegenstand der vorliegenden Erfindung sind Additivkonzentrate, insbesondere Kraftstoffadditiv-Konzentrate und Schmierstoffadditiv-Konzentrate, besonders bevorzugt Kraftstoffadditiv-Konzentrate, enthaltend, neben üblichen Additivkomponenten obiger Definition, wenigstens eine Verbindung der Formel I in Anteilen von 0,1 bis 80 Gew.-%, insbesondere 0,5 bis 60 Gew.-%, bezogen auf das Gesamtgewicht des Konzentrats.

Ein weiterer Gegenstand der Erfindung sind Schmierstoffzusammensetzungen, die wenigstens eine Verbindung der allgemeinen Formel I, wie zuvor definiert, sowie weitere Komponenten und/oder Additive enthalten. Bevorzugt sind Schmierstoffzusammensetzungen, die wenigstens eine Verbindung der Formel I in einer Menge von 0,1 bis 15 Gew.-%, insbesondere 0,5 bis 10 Gew.-%, bezogen auf die Gesamtmenge der Schmierstoffzusammensetzung, enthalten. Geeignete Grundstoffe der Schmierstoffzusammensetzungen sind die dem Fachmann bekannten üblichen flüssigen oder pastösen Schmierstoffe.

Ein weiterer Gegenstand der Erfindung sind Kraftstoffzusammensetzungen, vor allem Ottokraftstoffzusammensetzungen, die wenigstens eine Verbindung der allgemeinen Formel I, wie zuvor definiert, enthalten. Bevorzugt sind Kraftstoffzusammensetzungen, die wenigstens eine Verbindung der Formel I in einer Gesamtkonzentration von etwa 10 bis 5000 mg/kg Kraftstoff, bevorzugt 50 bis 2000 mg/kg Kraftstoff, enthalten.

Die erfindungsgemäß eingesetzten Verbindungen der Formel I eignen sich in vorteilhafter Weise als Trägeröle für Detergenzien und Dispergatoren in Kraft- oder Schmierstoffzusammensetzungen. Dabei zeigen die Verbindungen der Formel I allgemein selbst eine grenzflächenaktive Additivwirkung und eignen sich somit in der Regel selbst als Ventil-reinigende und/oder Ventil-reinhaltende Ottokraftstoffadditive. Daneben weisen sie die eingangs geschilderten Nachteile der aus dem Stand der Technik bekannten Trägeröle nicht auf. Sie zeigen darüber hinaus in der Regel ein sehr günstiges Viskositätsverhalten, insbesondere in der Kälte, das Formulierungs- und Anwendungsproblemen, wie z. B. Ventilstecken, vorbeugt. Die erfindungsgemäß verwendeten von hochreaktiven Polyisobutenen abgeleiteten Verbindungen der Formel I weisen zudem eine hohe Einheitlichkeit und/oder eine enge Molekulargewichtsverteilung auf. Sie zeigen eine besonders vorteilhafte Wirkung als Trägeröle sowie in der Regel auch als grenzflächenaktive Additive.

Die Erfindung wird anhand der folgenden, nicht einschränkenden Beispiele näher erläutert.

### Beispiele

### Herstellung der Polyisobutenphenole:

### Ia. Alkylierung mit einem Polyisobuten mit M_{N} = 200

In einem 2 1-Vierhalskolben wurden 94 g Phenol in einer Stickstoffatmosphäre bei 40 bis 45 °C aufgeschmolzen. Man tropfte 106 g BF₃-Diethyletheraddukt zu und kühlte auf 10°C. 500 g Polyisobuten mit M_{N} = 200 und einem Isopropenylanteil von 85 %, gelöst in 150 ml Hexan, wurden innerhalb von 90 Minuten bei 15 bis 20 °C zugetropft. Innerhalb von 1 Stunden ließ man auf Raumtemperatur erwärmen und rührte über Nacht nach. Die Reaktion wurde durch Zugabe von 200 ml 25 %iger Ammoniaklösung beendet. Die organische Phase wurde abgetrennt und danach 8-mal mit 500 ml Wasser gewaschen, über NaSO₄ getrocknet und das Lösungsmittel sowie geringe Phenolmengen im Vakuum entfernt: 330 g Öl (Polyisobutenphenol). Nach ¹H-NMR liegt ein Gemisch aus 15 Mol-% 2,4,6-Triisobutenylphenol, 65 Mol-% 2,4-Diisobutenylphenol und 20 Mol-% Monoisobutenylphenolen vor.

### I b. Alkylierung mit einem Polyisobuten mit M_{N} = 550

In einem 4 1-Vierhalskolben wurden 404,3 g Phenol in einer Stickstoffatmosphäre bei 40 bis 45 °C aufgeschmolzen. Man tropfte 191 g BF₃-Diethyletheraddukt zu und kühlte auf 10 °C. 1100 g Polyisobuten mit M_{N} = 550 und einem Dimethylvinylidenanteil von 85 %, gelöst in 1000 ml Hexan, wurden innerhalb von 150 Minuten bei 5 bis 10 °C zugetropft. Innerhalb von 4 Stunden ließ man auf Raumtemperatur erwärmen und rührte über Nacht nach. Die Reaktion wurde durch Zugabe von 1200 ml 25 %iger Ammoniaklösung beendet. Die organische Phase wurde abgetrennt und danach 8-mal mit 500 ml Wasser gewaschen, über NaSO₄ getrocknet und das Lösungsmittel sowie geringe Phenolmengen im Vakuum entfernt: 1236 g Öl (4-Polyisobutenylphenol).

### II a. Umsetzung mit Propylenoxid

In 420 g 4-Polyisobutenylphenol aus Beispiel Ib) wurden 7,4 g Kalium-tert.-butylat gelöst und der entstandene tert.-Butylalkohol am Rotationsverdampfer bei 130 °C und 50 mbar entfernt. 370 g des erhaltenen Gemischs wurden in einen 11-Autoklaven gefüllt, auf 100 °C erhitzt und Propylenoxid aufgepresst, bis ein Innendruck von 5 bis 6 bar erreicht war. Der Druck wurde durch bedarfsweise Zugabe von Propylenoxid konstant gehalten. Nach 8 Stunden Reaktionsdauer waren insgesamt 814 g Propylenoxid umgesetzt. Nach Entspannen des Autoklaven wurde das Produkt in 1 1 Hexan aufgenommen, einmal mit 500 ml 5%iger HCl und dreimal mit je 500 ml Wasser gewaschen und anschließend über wasserfreiem Natriumsulfat getrocknet. Das Lösungsmittel wurde bei 120 °C und 5 mbar am Rotationsverdampfer entfernt. Man erhielt 994 g eines hellen Öls. ¹H-NMR: (δ in ppm) 7,25 Dublett 2H; 6,75 Dublett 2H; 3,75-3,25 breites Multiplett 81H; 1,8 Singulett 2H; 1,5 Singulett 19H; 1,2 Singulett/Dublett (überlagert) 130H; 1 Singulett 9H; 0,8 Singulett 6H. Danach sind pro Mol 27 Einheiten Propylenoxid und 10 Einheiten Isobutylen enthalten.

## Patentansprüche

1. Verwendung von Verbindungen der allgemeinen Formel I
R^{a} R^{b}ₘ R^{c}ₙ)B-(O-A)ₚ-OH (I)
worin
R^{a}, R^{b} und R^{c} unabhängig voneinander für einen Polyalkenylrest stehen, der wenigstens ein tertiäres oder quartäres Kohlenstoffatom aufweist,
wobei die Polyalkenylreste R^{a} und, soweit vorhanden, R^{b} und R^{c} sich von Polyalkenen ableiten, die wenigstens 70 Gew.-% Isobuten, bezogen auf die Gesamtmenge der eingebauten Alkene, eingebaut enthalten und
wobei die Polyalkenylreste R^{a} und, soweit vorhanden, R^{b} und R^{c} sich von Polyalkenen ableiten, die wenigstens eine C=C-Doppelbindung aufweisen und die zu wenigstens 70 Mol-% mit Methylvinyliden- gruppen (-C(-CH₃)=CH₂) und/oder Dimethylvinylgruppen (-CH=C(CH₃)₂) terminiert sind,
B für einen Benzolring steht, der zusätzlich noch 4-(m+n) von R^{b} und R^{c} verschiedene Substituenten tragen kann, die ausgewählt sind unter Alkyl und Alkoxy,
A für C₂- bis C₈-Alkylen steht, wobei die Alkylenoxideinheiten -(O-A)- gleiche oder verschiedene Alkylengruppen A aufweisen können und die Reihenfolge der Alkylenoxideinheiten beliebig ist,
m und n unabhängig voneinander für 0 oder 1 stehen,
p für eine ganze Zahl von 5 bis 200 steht und
die Gruppe (R^{a} R^{b}ₘ R^{c}ₙ)B- ein zahlenmittleres Molekulargewicht im Bereich von 254 bis 5000 aufweist,
und von Gemischen davon als Additive in Kraft- oder Schmierstoffzusammensetzungen.

2. Verwendung nach Anspruch 1, wobei die Polyalkenylreste R^{a} und, soweit vorhanden, R^{b} und R^{c} jeweils 20 bis 40 Kohlenstoffatome aufweisen.

3. Verwendung nach einem der vorhergehenden Ansprüche, wobei in der Verbindung der Formel I das Molekulargewicht der Gruppe -(O-A)ₚ-OH größer ist, als das der Gruppe (R^{a} R^{b}ₘ R^{c}ₙ)B-.

4. Additivgemisch für Kraft- oder Schmierstoffe, enthaltend wenigstens eine Verbindung der Formel I, wie in einem der Ansprüche 1 bis 3 definiert, in Kombination mit weiteren Kraft- oder Schmierstoffadditiven.

5. Gemisch nach Anspruch 4 in Form eines Konzentrats, das 0,1 bis 80 Gew.-% wenigstens einer Verbindung der Formel I, bezogen auf das Gesamtgewicht des Konzentrats, enthält.

6. Schmierstoffzusammensetzung, enthaltend wenigstens eine Verbindung der Formel I, wie in einem der Ansprüche 1 bis 9 definiert, sowie weitere Komponenten und/oder Additive.

7. Kraftstoffzusammensetzung, enthaltend in einem Kraftstoff wenigstens eine Verbindung der Formel I, wie in einem der Ansprüche 1 bis 3 definiert, sowie weitere Komponenten und/oder Additive.

## Claims

1. The use of compounds of the formula I
(R^{a} R^{b}ₘ R^{c}ₙ) B-(O-A)ₚ-OH (I)
where
R^{a}, R^{b} and R^{c}, independently of one another, are a polyalkenyl radical which has at least one tertiary or quaternary carbon atom, wherein the polyalkenyl radicals R^{a} and, if present, R^{b} and R^{c} are derived from polyalkenes into which at least 70% by weight, based on the total amount of the incorporated alkenes, of isobutene have been incorporated and wherein the polyalkenyl radicals R^{a} and, if present, R^{b} and R^{c} are derived from polyalkenes which have at least one C=C double bond and are terminated to an extent of at least 70 mol % with methylvinylidene groups (-C(-CH₃)=CH₂) and/or dimethylvinyl groups (-CH=C(CH₃)₂),
B is a benzene ring which may additionally carry 4-(m+n) substituents which differ from R^{b} and R^{c} and are selected from alkyl and alkoxy,
A is C₂- to C₈-alkylene, it being possible for the alkylene oxide units -(O-A)- to have identical or different alkylene groups A and for any desired sequence of the alkylene oxide units to be present,
m and n, independently of one another, are 0 or 1,
p is an integer from 5 to 200 and
the group (R^{a} R^{b}ₘ R^{c}ₙ) B- has a number average molecular weight of from 254 to 5 000,
and of mixtures thereof as additives in fuel or lubricant compositions.

2. The use as claimed in claim 1, wherein the polyalkenyl radicals R^{a} and, if present, R^{b} and R^{c} are each of 20 to 40 carbon atoms.

3. The use as claimed in any of the preceding claims, wherein, in the compound of the formula I, the molecular weight of the group -(O-A)ₚ-OH is greater than that of the group (R^{a} R^{b}ₘ R^{c}ₙ)B-.

4. An additive mixture for fuels or lubricants, comprising at least one compound of the formula I as defined in any of claims 1 to 3, in combination with further fuel or lubricant additives.

5. The mixture as claimed in claim 4 in the form of a concentrate which comprises from 0.1 to 80% by weight, based on the total weight of the concentrate, of at least one compound of the formula I.

6. A lubricant composition comprising at least one compound of the formula I as defined in any of claims 1 to 3 and further components and/or additives.

7. A fuel composition comprising, in a fuel, at least one compound of the formula I as defined in any of claims 1 to 3 and further components and/or additives.

## Revendications

1. Utilisation de composés de formule générale I
(R^{a} R^{b}ₘ R^{c}ₙ,)B-(O-A)ₚ-OH (I)
dans laquelle :
R^{a}, R^{b} et R^{c} représentent, indépendamment les uns des autres, un radical polyalcényle qui renferme au moins un atome de carbone tertiaire ou quaternaire,
où les radicaux polyalcényle R^{a} et, s'ils sont présents, R^{b} et R^{c} sont dérivés de polyalcènes dans lesquels ont été incorporés au moins 70 % en poids d'isobutène, par rapport à la quantité totale des alcènes incorporés, et
où les radicaux polyalcényle R^{a} et, s'ils sont présents, R^{b} et R^{c} sont dérivés de polyalcènes qui renferment au moins une double liaison C=C et sont terminés à au moins 70 % en moles par des groupes méthylvinylidène (-C(-CH₃)=CH₂) et/ou des groupes diméthylvinyle (-CH=C(CH₃)₂),
B représente un noyau benzènique qui peut, en outre, porter également 4-(m+n) substituants différents de R^{b} et de R^{c}, qui sont choisis parmi un groupe alkyle et un groupe alcoxy,
A représente un groupe alkylène en C₂ à C₈, où les motifs oxyde d'alkylène -(O-A)- peuvent renfermer des groupes alkylène A identiques ou différents et l'ordre des motifs oxyde d'alkylène est quelconque,
m et n, indépendamment l'un de l'autre, valent 0 ou 1,
p représente un entier de 5 à 200, et
le groupe (R^{a} R^{b}ₘ R^{c}ₙ)B- présente un poids moléculaire moyen en nombre dans la plage de 254 à 5 000,
et de leurs mélanges en tant qu'additifs dans des compositions de carburant ou de lubrifiant.

2. Utilisation selon la revendication 1, dans laquelle les radicaux polyalcényle R^{a} et, s'ils sont présents, R^{b} et R^{c} renferment chacun de 20 à 40 atomes de carbone.

3. Utilisation selon l'une quelconque des revendications précédentes, dans laquelle, dans le composé de formule I, le poids moléculaire du groupe -(O-A)p-OH est supérieur à celui du groupe (R^{a} R^{b}ₘ R^{c}ₙ)B-.

4. Mélange d'additifs pour des carburants ou des lubrifiants, contenant au moins un composé de formule I, tel que défini dans l'une quelconque des revendications 1 à 3, en combinaison avec des additifs de carburants ou de lubrifiants supplémentaires.

5. Mélange selon la revendication 4 sous la forme d'un concentré, qui contient de 0,1 à 80 % en poids d'au moins un composé de formule I, par rapport au poids total du concentré.

6. Composition de lubrifiant contenant au moins un composé de formule I, tel que défini dans l'une quelconque des revendications 1 à 9, ainsi que des composants et/ou des additifs supplémentaires.

7. Composition de carburant contenant, dans un carburant, au moins un composé de formule I, tel que défini dans l'une quelconque des revendications 1 à 3, ainsi que des composants et/ou des additifs supplémentaires.
